# EUROPEAN PATENT APPLICATION

(11) **EP 1 564 738 A2**
(43) Date of publication of application: **17.08.2005**
(21) Application number: 05003420.6
(22) Date of filing: 17.02.2005
(51) Int. Cl.: G11B 20/00, G11B 20/12, G06F 1/00, G06F 9/445

(54) **Method for partitioning hard disc drive and hard disc drive adapted thereto**

(30) Priority: 17.02.2004 KR 2004010419
(71) Applicant: Samsung Electronics Co., Ltd., Suwon-si, Gyeonggi-do (KR)
(72) Inventor: Choi, Jin-Won, Yeongtong-gu Suwon-si Gyeonggi-do (KR)
(74) Representative: Grünecker, Kinkeldey, Stockmair & Schwanhäusser Anwaltssozietät

(57) **Abstract**

A method to partition a hard disc drive which conceals part of a storage region (300) in a hard disc drive from the outside to thereby heighten a security of data, and a hard disc drive configured for the HDD partitioning method. The hard disc drive partitioning method includes receiving a section table (310) having information on the number, passwords, starting positions, lengths, and activation or non-activation of sections each having a master boot record (306/308) and file allocation information; and storing the section table (310) in the storage region (300) which may be accessed only by the hard disc drive, in which the hard disc drive may access only the activated section among the sections. Here, the hard disc drive allows only activated section to be accessed among the sections.

## Description

The present invention relates to a method of partitioning a hard disc drive (HDD), and more particularly, to a method of partitioning a hard disc drive which conceals part of a storage region in a hard disc drive from the outside to thereby heighten a security level of data stored therein, and a hard disc drive that is configured to the HDD partitioning method.

A hard disc drive (HDD) is a recording apparatus that is used to store information therein. Information is usually recorded on one or more concentric tracks that are located on any one surface of a magnetic recording disc. The magnetic recording disc is rotatably mounted on a spindle motor. A read/write unit, mounted on an actuator arm, that is rotated by a voice coil motor accesses information. The voice coil motor is excited by a current and then rotates an actuator. The rotation of the actuator causes a read/write head to move. The read/write head detects a change in a magnetic field generated from the surface of the disc and reads information recorded on the surface of the disc. Also, in order to write information on data tracks, current is supplied to the read/write head. Current generates a magnetic field and the generated magnetic field magnetizes the surface of the disc.

A partition table (PT) administers substantially all of the data areas of the hard disc drive. The PT exists in a master boot record (MBR) and a file allocation table (FAT) exists in each of the partitions of the hard disc drive.

A logical block address (LBA) represents a physical position within the hard disc drive using a linear addressing method, in which one block is usually composed of 512 bytes. LBA 0 is the first appearing address, and physically appears in a position where the partition table is located. The LBA 0 is also called a master boot record (MBR). The partition table includes partitioning information of the hard disc drive. An allocation table administers each of the partition areas that are partitioned by the partition table. Accordingly, the hard disc drive may be partitioned logically.

Meanwhile, the term "partition" means that a physical disc is partitioned into some areas so that the physical disc may be easily administrated. In the case that there are various operating systems, each of several specific file systems may be independently maintained in a specific area. As a result, although a partition may be lost, the other partition areas may be protected from a similar loss at a high probability.

However, since each of the partition areas is exposed in the conventional hard disc drive, viruses, hacking, user's mistakes, incorrect software operations, etc., may damage the partition areas.

Here, the exposed partition areas mean that the partition areas of the hard disc drive may be accessed without a special restriction in the hard disc drive.

If a single hard disc drive is partitioned into two partition areas, each partition area is recognized into a drive C or D, for example. Here, since two partition areas are exposed without a special protecting apparatus, searching the two areas using directory commands in a host computer is possible. Even though one attribute of the two areas is set as a read-disable or a write-disable, the two areas may be hacked by malicious users. That is, the conventional hard disc drive has a problem in view of security since the hard disc drive is exposed to potential hazard.

It is the object of the present invention to provide a method of partitioning a hard disc drive in which the hard disc drive is partitioned into one or more independent sections which belong to a more generic concept than a concept of partitions, and section partition information is stored in an area that cannot be accessed by a host computer.

This object is solved by the subject matter of the independent claims.

Preferred embodiments are defined in the dependent claims.

According to an aspect of the present invention, a hard disc drive is configured for the above method of partitioning a hard disc drive.

According to another aspect of the present invention, a method of partitioning a storage region of a hard disc drive comprises receiving a section table having information on the number, passwords, starting positions, lengths, and activation or non-activation of sections each having a master boot record and file allocation information; and storing the section table in the storage region which may be accessed only by the hard disc drive, in which the hard disc drive may access only the activated section among the sections.

Here, the partitioning method further comprises outputting the section table in response to a section table access command accompanying the same password as that contained in the section table.

According to another aspect of the present invention, a hard disc drive comprises a storage region which is partitioned into sections each having a master boot record and file allocation information, and a maintenance cylinder storing a section table having information on the number, passwords, starting positions, lengths, and activation or non-activation of sections each having a master boot record and file allocation, in which the section table having information on the number, passwords, starting positions, lengths, and activation or non-activation of sections is received to be stored in the maintenance cylinder, in which only the activated section among the sections may be accessed.

Additional and/or other aspects and advantages of the invention will be set forth in part in the description which follows and, in part, will be obvious from the description, or may be learned by practice of the invention.

These and/or other aspects and advantages of the invention will become apparent and more readily appreciated from the following description of the embodiments, taken in conjunction with the accompanying drawings of which:
FIG. 1 shows an example of a hard disc drive;
FIG. 2 is a block diagram showing an electrical system that controls the hard disc drive 10 shown in FIG. 1;
FIG. 3 is a diagram to explain a concept of a method of partitioning a hard disc drive according to the present invention;
FIG. 4 is a flowchart view to explain a method of setting a section in a method of partitioning a hard disc drive according to the present invention;
FIG. 5 is a flowchart view to explain a method of selecting a section in a method of partitioning a hard disc drive according to the present invention; and
FIG. 6 is a flowchart view to explain a file access operation of a hard disc drive partitioned by a hard disc drive partitioning method according to the present invention.

Reference will now be made in detail to the embodiments of the present invention, examples of which are illustrated in the accompanying drawings, wherein like reference numerals refer to the like elements throughout. The embodiments are described below to explain the present invention by referring to the figures.

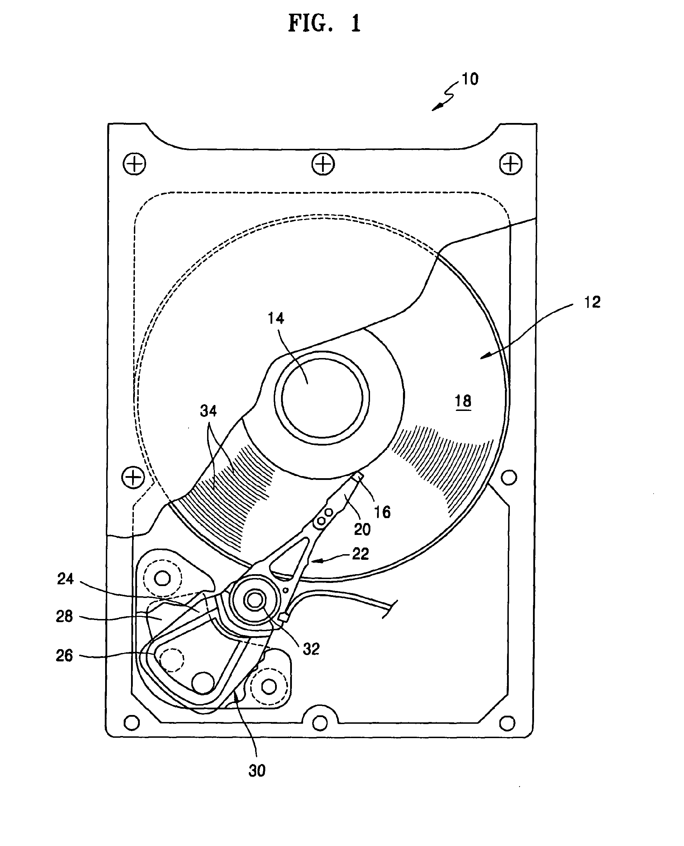

FIG. 1 shows an example of a hard disc drive. Referring to FIG. 1, a hard disc drive 10 includes a disc 12 that is rotated by a spindle motor 14 and a head 16 that is adjacent to the surface of the disc 12 to gain access to the disc 12.

The spindle motor 14 rotates the disc 12. The head 16 magnetizes and detects a magnetic field of the disc 12 in order to record information on the disc 12 or read information recorded on the disc 12. Only a single head 16 is shown in FIG. 1, but in an alternate embodiment, a write head to magnetize the disc 12 and a read head to detect a magnetic field of the disc 12 may be integrally formed into a single read/write head.

The head 16 may be integrated with a slider 20. The slider 20 forms an air bearing between the head 16 and the surface 18 of the disc 12. Meanwhile, the slider 20 may be integrated with a head gimbal assembly (HGA) 22. The HGA 22 is attached to an actuator arm 24 including a voice coil 26.

The voice coil 26 constitutes a voice coil motor (VCM) 30 together with a magnet assembly 28. When current is supplied to the voice coil 26, torque is generated in order to cause the actuator arm 24 to rotate with respect to a bearing assembly 32. The head 16 moves across the surface 18 of the disc 12 according to the rotation of the actuator arm 24.

Information is recorded on annular tracks 34 of the disc 12. Each of the tracks 34 includes a number of sectors. Each sector includes a user data region and a servo data region. A gray code identifying sectors and tracks or cylinders and a servo burst signal of a head position control are recorded in the servo data region.

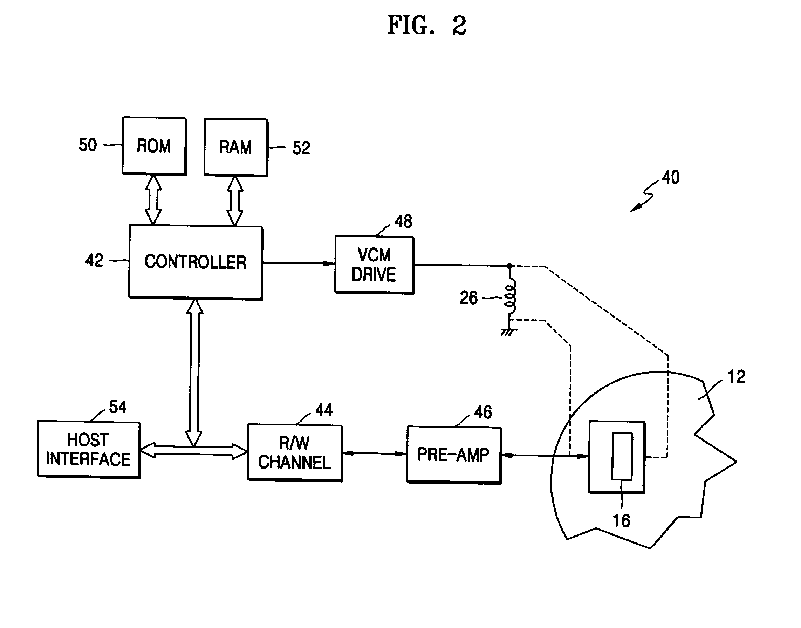

FIG. 2 is a block diagram showing an electrical system to control the hard disc drive 10 shown in FIG. 1. The electrical system shown in FIG. 2 includes a read/write (R/W) channel circuit 44 and a controller 42 that is electrically connected with the head 16 by a pre-amplifier circuit 46. A digital signal processor (DSP), a microprocessor, a microcontroller and the like may be used as the controller 42. The controller 42 sends a control signal to the R/W channel circuit 44 in order to read information from the disc 12 or write information on the disc 12.

Information is transferred between the R/W channel circuit 44 and a host interface circuit 46. The host interface circuit 46 includes a control circuit (not shown) that controls the hard disc drive 10 to be interfaced with a host system (not shown) such as a personal computer, and a buffer memory (not shown) that buffers information transferred between the hard disc drive 10 and the host system (not shown).

The controller 42 is also connected to a VCM drive 48 that supplies driving current to drive a voice coil 26. The controller 42 sends a control signal to the VCM drive 48 to control movement of the head 16.

The controller 42 is connected to a non-volatile memory such as a ROM or a flash memory device 50, and a RAM device 52. The memory devices 50 and 52 include commands and data that are used to allow the controller 42 to perform a software routine.

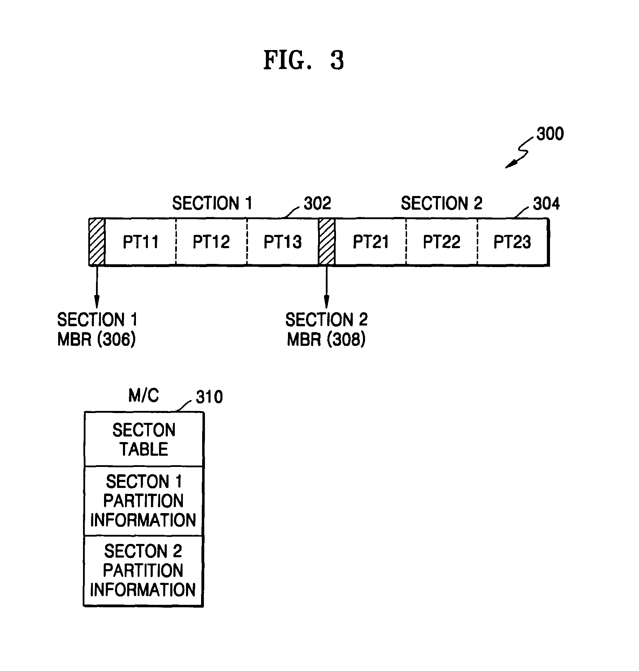

FIG. 3 is a schematic diagram to explain a concept of a method of partitioning a hard disc drive according to the present invention.

Referring to FIG. 3, a storage region 300 in the hard disc drive is partitioned into two mutually independent sections 302 and 304. Each of the sections 302 and 304 may be accessed externally only if the section 302 or 304 is activated. Each of the sections 302 and 304 may be partitioned into a plurality of partitions according to a typical partitioning method. In FIG. 3, a first section 302 and a second section 304 are partitioned into three partitions, respectively.

Master boot records 306 and 308 having partition information of each section are located in first physical sectors of the respective sections 302 and 304.

A section table 310 having section partition information is administered by the hard disc drive. That is, the section table 310 is stored in a region that cannot be accessed externally, for example, a maintenance cylinder (M/C) in the hard disc drive. The hard disc drive administers partitioning and activation of the sections in response to an external section table access command. Here, the hard disc drive requests a password in order to substantially guarantee security. Together with the section table access command, an externally supplied password is compared with the password stored in the section table. Whether or not partitioning and activation of the sections will be performed is determined according to a result of the comparison.

The following Table 1 illustrates contents of the section table.

**Table 1**

| Byte | F/V | Description |
|---|---|---|
| 0 - 7 | F | SECTION Table specifier: "SECTABLE" |
| 8 - 9 | F | SECTION Table revision |
| 10-11 | V | Number of section |
| 12-13 | V | Current selected section |
| 14 - 17 | V | Password |
| 18-19 | V | Enable or Disable |
| 20 - 31 | R | Reserved |
| 32 - 37 | V | SECTION 0 START LBA |
| 38 - 43 | V | SECTION 0 LBA NUMBER |
| 44 - 49 | V | SECTION 1 START LBA |
| 50 - 55 | V | SECTON 1 LBA NUMBER |
| 56 - 61 | V | SECTION 2 START LBA |
| 62-67 | V | SECTION 2 LBA NUMBER |
| - | - | - |
| 500 - 505 | V | SECTION 39 START LBA |
| 506 - 511 | V | SECTION 39 LBA NUMBER |

In Table 1, a character "F" means that the contents of a corresponding byte is fixed and cannot be altered, a character "V" means that the contents of a corresponding byte is variable and can be altered, and a character "R" means that the contents of a corresponding byte is reserved and must be zero.

In the case of a drive of 149.06GB (Logical Block Address (LBA): 312, 618, 096), if it is set that SECTION 0 START LBA becomes 0, LBA NUMBER becomes 99,999,999, SECTION 1 START LBA becomes 100,000,000, and LBA NUMBER becomes 212,618,096, SECTION 0 has a capacity of 47.68GB, and SECTION 1 has a capacity of 101.38GB.

Meanwhile, in the case that SECTION 0 is activated, the hard disc drive is recognized to have only a capacity of 47.68GB when viewed from a host computer. In the case that SECTION 1 is activated, the hard disc drive is recognized to have a capacity of 101.38GB.

In the case that a section is added, corrected, deleted, or activated externally from the hard disc drive, a section table access command is used.

In order to perform a section table access, a get section table command and a set section table command are prepared. In the present invention, a smart command that is a vendor unique command is used among ATA mandatory commands.

The smart command whose command code is B0h among the ATA mandatory commands uses a value of a feature register as a subcommand, is a command for the hard disc drive to perform other operations according to the feature register value.

Meanwhile, a vendor may use a region where a value of a feature register is between E0h and FFh (subcommands) . In the present invention, part of the region is used. The region is presented as a convenient example for explanation. The region may be altered into other regions as desired.

The following Table shows an example of a section table access command presented in the present invention.

**Table 2:**

| Value | Command |
|---|---|
| E0h | GET SECTION TABLE |
| E1 h | SET SECTION TABLE |

The following Table 3 shows a format of a get section table command.

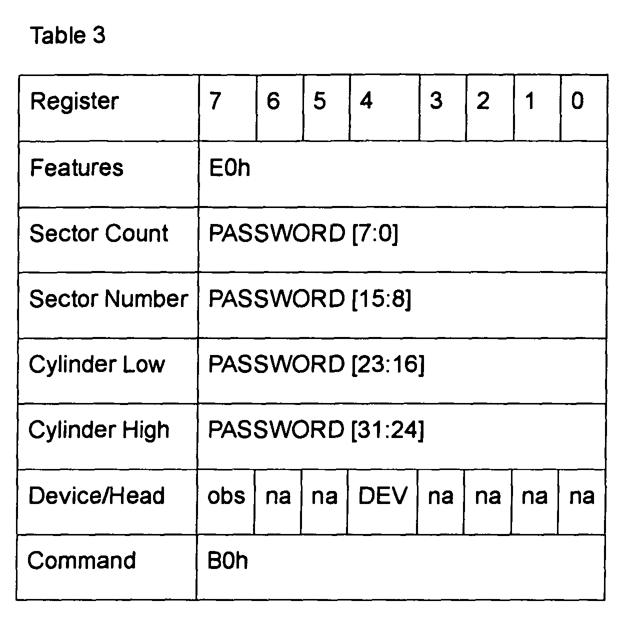

ATA commands are defined as command codes and variables accompanying the variables. The variables are transferred via a feature register, a sector count register, a sector number register, a cylinder low register, a cylinder high register, and a device/head register.

Referring to Table 3, the get section table command is a subcommand of a smart command where a command code is E0h. The code of the subcommand is E0h. The password performs a get section table command, which is initially set to zero. DEV represents a selected device, that is, a master HDD (Hard Disc Drive) and a slave HDD.
The following Table 4 illustrates a format of a set section table command.

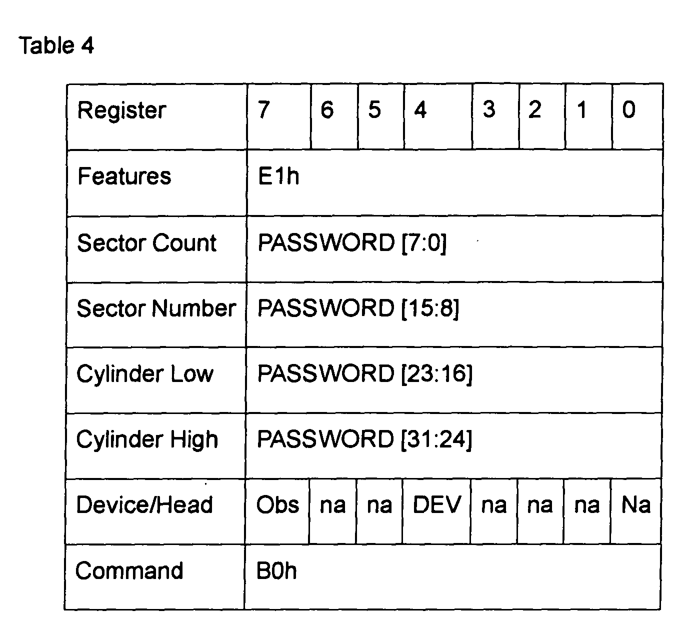

Referring to Table 4, the set section table command is a subcommand of a smart command where a command code is E0h. The code of the subcommand is E1 h. The password performs a set section table command, which is initially set to zero. DEV represents a selected device, that is, a master HDD (Hard Disc Drive) and a slave HDD.

The set section table command is used when a section table is set in the hard disc drive. In other words, if a set section table command is not performed, the hard disc drive is accessed by a general read/write command as in the conventional art. Once a section table is set by the set section table command, only the activated section in the hard disc drive may be accessed by a general read/write command. A get section table command is used to correct the activated section, to thereby obtain a section table as shown in Table 1, and then to add/correct/delete a section. Then, when a set section table command is used again, an altered section table is set.

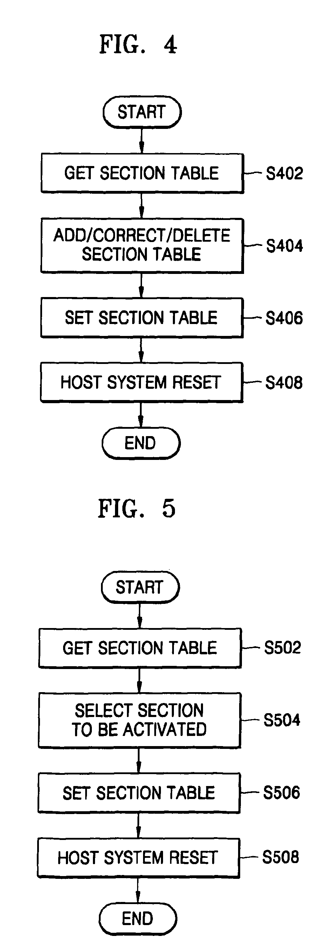

FIG. 4 is a flowchart view to explain a method of setting a section in a method of partitioning a hard disc drive according to the present invention.

First, a get section table command is used to obtain a current section table. If a password is set in advance, the password should be input together with the get section table command (402).

Referring to Table 2, a desired portion of the current section table is corrected by a process involving adding/correcting/deleting a section (404).

A set section table command is used to set an altered section table. If a password is set in advance, the password should be input together with the set section table command (406). Then, the hard disc drive replaces an existing section table by a new section table.

When the password is to be altered, a new password is set in byte offsets 14-17 at the time of performing a set section table command.

After performing the set section table command, power for a host system is reset, to thereby apply an altered section table in the hard disc drive (408).

FIG. 5 is a flowchart view to explain a method of selecting a section in a method of partitioning a hard disc drive according to the present invention.

First, a get section table command is used to obtain a current section table. If a password is set in advance, the password should be input together with the get section table command (502).

Referring to Table 2, a current section item of the current section table is altered (504).

A set section table command is used to set an altered section table. If a password is set in advance, the password should be input together with the set section table command (506).

After performing the set section table command, power for the host system is reset, to thereby apply an altered section table in the hard disc drive (508).

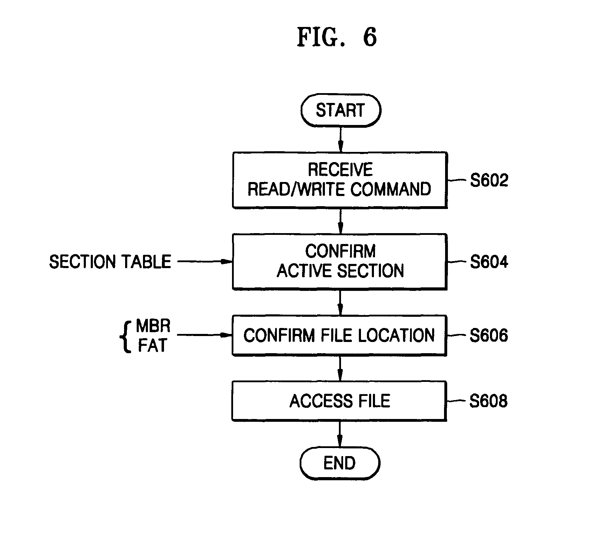

FIG. 6 is a flowchart view to explain a file access operation of a hard disc drive partitioned by a hard disc drive partitioning method according to the present invention.

When a read/write command is applied in the host computer (602), the hard disc drive is recognized as having a quantity of an activated section with reference to a section table 310 (604).

Then, a position of a corresponding file is obtained with reference to a partition table of an activated section and a file allocation table (FAT) (606). Here, a physical position of a corresponding file is obtained with reference to a logical block address (LBA) where a master boot record (MBR) of an activated section is located and position information recorded on a FAT of a corresponding section.

A corresponding file is then read/written (608).

As may be seen from FIG. 6, only an activated section is accessed by a general read/write command. When viewed from the outside of the hard disc drive, that a corresponding hard disc drive has a capacity as large as that of only the activated section may be recognized.

Thus, although virus, hacking, user's mistakes, an incorrect software operation and the like occur, sections may be protected.

As is described above, in a method of partitioning a hard disc drive according to the present invention, a storage region in the hard disc drive is partitioned into sections that are more generic than conventional partitions, and since activated sections are not externally exposed, heightening security of the activated sections is possible.

Although a few embodiments of the present invention have been shown and described, it would be appreciated by those skilled in the art that changes may be made in these embodiments without departing from the principles of the invention, the scope of which is defined in the claims.

## Claims

1. A method of partitioning a storage region of a hard disc drive, the hard disc drive partitioning method comprising:
receiving a section table having information on the number, passwords, starting positions, lengths, and activation or non-activation of sections each having a master boot record and file allocation information; and
storing the section table in a storage region that can be accessed only by the hard disc drive, wherein the hard disc drive may access only the activated section among the sections.

2. The hard disc drive partitioning method of claim 1, further comprising a maintenance cylinder in the storage region of the hard disc drive, wherein the storing occurs in the maintenance cylinder.

3. The hard disc drive partitioning method of claim 1, further comprising setting the section table via a vendor unique command that is allowed by a vendor from among ATA commands.

4. The hard disc drive partitioning method of claim 1, further comprising outputting the section table in response to a section table access command accompanying the same password as that contained in the section table.

5. The hard disc drive partitioning method of claim 4, further comprising reading the section table via using a vendor unique command that is allowed by a vendor from among ATA commands.

6. A hard disc drive comprising:
a storage region which is partitioned into sections each having a master boot record and file allocation information; and
a maintenance cylinder to store a section table having information on the number, passwords, starting positions, lengths, and activation or non-activation of sections each having a master boot record and file allocation, in which the section table having information on the number, passwords, starting positions, lengths, and activation or non-activation of sections is received to be stored in the maintenance cylinder, in which only the activated section among the sections may be accessed.

7. The hard disc drive of claim 6, wherein the hard disc drive receives the section table that is set using a vendor unique command that is allowed by a vendor from among ATA commands.

8. The hard disc drive of claim 6, wherein the hard disc drive outputs the section table in response to a section table access command accompanying the same password as that which is contained in the section table.

9. The hard disc drive of claim 6, wherein the section table is output in response to a vendor unique command that is allowed by a vendor among ATA commands.

10. A method of partitioning a storage region of a hard disc drive, the hard disc drive partitioning method comprising:
providing sections of the hard disk in the storage region, a certain number of which are activated;
receiving a section table having information relating to the provided sections of the hard disk; and
storing the section table in the storage region that can be accessed only by the hard disc drive, to provide access information so as to allow the hard disc drive to access only the activated sections.

11. The method according to claim 10, wherein the information relating to the provided sections includes a number, passwords, starting positions, lengths, and activation or non-activation status of the provided sections.

12. The method according to claim 11, wherein the provided sections each include a master boot record and file allocation information.

13. The method according to claim 12, wherein the storing in the storage region occurs in a region of the hard disk drive including a maintenance cylinder.

14. The method according to claim 12, further comprising setting the section table via a vendor unique command that is allowed by a vendor from among ATA commands.

15. The method according to claim 12, further comprising outputting the section table in response to a section table access command accompanying the same password as that contained in the section table.

16. The method according to claim 15, further comprising reading the section table via using a vendor unique command that is allowed by a vendor from among ATA commands.

17. A computer readable medium to store a method of partitioning a storage region of a hard disc drive, the method comprising:
providing sections of the hard disk in the storage region, a certain number of which are activated;
receiving a section table having information relating to the provided sections of the hard disk; and
storing the section table in the storage region that can be accessed only by the hard disc drive, to provide access information so as to allow the hard disc drive to access only the activated sections.

18. A hard disc drive comprising:
a storage region which is partitioned into sections, some of which are activated, each section having a master boot record and file allocation information; and
a maintenance cylinder to store a section table having information, which may only be accessed if the information relates to an activated one of the sections.

19. The hard disc drive according to claim 18, wherein the information includes the number, passwords, starting positions, lengths, and activation or non-activation status of the sections.

20. The hard disc drive according to claim 19, wherein the hard disc drive receives the section table that is set using a vendor unique command that is allowed by a vendor from among ATA commands.

21. The hard disc drive according to claim 19, wherein the hard disc drive outputs the section table in response to a section table access command accompanying the same password as that which is contained in the section table.

22. The hard disc drive according to claim 19, wherein the section table is output in response to a vendor unique command that is allowed by a vendor among ATA commands.

23. The hard disc drive according to claim 19, wherein the sections of the storage region are mutually independent.

24. The hard disc drive according to claim 23, wherein each of the mutually independent sections may be partitioned.

25. The hard disc drive according to claim 19, wherein the section table is administered by the hard disc drive in response to an external section table access command.

26. The hard disc drive according to claim 25, wherein an external password is requested in order to guarantee security.

27. The hard disc drive according to claim 26, wherein if the external password is the same as the stored password, partitioning and activation of the sections to which the external section table access command relates may be performed.

28. A method setting a section in a method of partitioning a storage region of a hard disc drive in a host, comprising:
obtaining a current section table;
correcting a desired portion of the section table so as to alter the section table;
setting the altered section table; and
resetting the host.

29. The method according to claim 28, wherein the obtaining comprises using a get table command.

30. The method according to claim 29, wherein if a password is set in advance, obtaining further comprises inputting the password with get section table command.

31. The method according to claim 28, wherein the correcting comprises one or more of adding, correcting, and deleting sections of the section table.

32. The method according to claim 28, wherein the setting comprises using a set section table command.

33. The method according to claim 32, wherein if a password is set in advance, the setting further comprises inputting the password with the set section table command.

34. A method selecting a section in a method of partitioning a storage region of a hard disc drive in a host, comprising:
obtaining a current section table;
correcting a desired portion of the section table;
setting the altered section table; and
resetting the host.

35. A method to access a file of a hard disc drive of a host that has been partitioned by a hard disc drive partitioning method, comprising:
recognizing an activated section with reference to a section table, when a read/write command is applied in the host;
obtaining a position of a corresponding file with reference to a partition table of an activated section and a file allocation table; and
reading/writing the corresponding file.

36. The method according to claim 35, wherein a physical position of the corresponding file is obtained with reference to a logical block address where a master boot record of the activated section is located.

37. The method according to claim 35, wherein only the activated section is accessed when reading/writing the corresponding file.
